(19) Europäisches Patentamt
European Patent Office
Office européen des brevets

(11) Publication number: 0 128 587 B1

(12) **EUROPEAN PATENT SPECIFICATION**

(45) Date of publication of patent specification: **23.05.90**

(51) Int. Cl.$^5$: **C 08 F 10/00,** C 08 F 4/64

(21) Application number: **84106756.4**

(22) Date of filing: **13.06.84**

(54) **Process for producing branched alpha-olefin polymers.**

(30) Priority: **14.06.83 JP 107338/83**

(43) Date of publication of application:
**19.12.84 Bulletin 84/51**

(45) Publication of the grant of the patent:
**23.05.90 Bulletin 90/21**

(84) Designated Contracting States:
**BE DE FR GB IT NL**

(56) References cited:
**EP-A-0 111 902**
**GB-A-2 055 112**

(73) Proprietor: **SUMITOMO CHEMICAL COMPANY, LIMITED**
**Kitahama 4-chome 5-33**
**Chuo-ku Osaka 541 (JP)**

(72) Inventor: **Shiga, Akinobu**
**17-6, Honcho-2-chome**
**Koganei-shi (JP)**
Inventor: **Sasaki, Toshio**
**9-422, Yushudainishi-1-chome**
**Ichihara-shi (JP)**
Inventor: **Kojima, Junpei**
**9-433, Yushudainishi-1-chome**
**Ichihara-shi (JP)**

(74) Representative: **Vossius & Partner**
**Siebertstrasse 4 P.O. Box 86 07 67**
**D-8000 München 86 (DE)**

**EP 0 128 587 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a process for producing a branched α-olefin polymer. It is known that the melting point of an isotactic polymer of a branched α-olefin generally tends to increase when the degree of branching increases and when the position of the branching approaches the position of carbon-carbon double bond. Accordingly, isotactic polymers of branched α-olefins and particularly those having the branch at the carbon atom of the third position are excellent in heat resistance and useful as industrial material.

Like usual α-olefins, branched α-olefins can also be polymerized with Ziegler catalysts. Unlike α-olefins, however, in case of branched α-olefins, the polymerization activity lowers extremely as compared with that of α-olefins, and such low polymerizing activity is particularly remarkable when the branch is located on the carbon atom of the third position.

Various processes for polymerizing branched α-olefins were proposed in, for example, Japanese Patent Application Kokai (Laid-Open) Nos. 59,989/76, 195,704/82, 182,305/82 and 8,708/83. However, when branched α-olefins are polymerized by these processes, the polymerization activity is still not sufficiently high.

GB—A—2 055 112 discloses a catalyst for the polymerization of olefins which may be branched comprising (A) a solid catalyst component obtained by reacting a tetravalent titanium compound having a hydrocarbyloxy group with an organoaluminum compound in the presence of an ether to give a liquid material or to give a solid titanium component (a) which is solubilized by addition of a tetravalent titanium halide with or without an ether and heat-treating the liquid material at a temperature of 70°C to 180°C with or without addition of a tetravalent titanium halide, and (B) an organoaluminum cmpound.

The above catalyst is said to be effective in (co)polymerizing olefins with high stereo regularity and to exhibit a high polymerization activity.

The present inventors conducted elaborated studes with the aim of finding a catalyst system showing a high activity on the polymerization of branched α-olefins. As the result, it was found that a catalyst system comprising a combination of an organo-aluminum compound and a solid catalyst component containing titanium, chlorine and a hydrocarbyloxy group shows a polymerization activity several times higher than that exhibited by the catalyst systems used in the above-mentioned known processes. Based on this finding, the present invention has been accomplished.

It is an object of this invention to provide a solid catalyst component for polymerizing branched α-olefins.

It is another object of this invention to provide a process for polymerizing branched α-olefins by using the novel solid catalyst component.

Other objects and advantages of this invention will become apparent from the descriptions presented below.

According to this invention, there is provided a process for homopolymerizing an α-olefin branched at the carbon atom of the third position or copolymerizing said α-olefin with another olefin in the presence of a catalyst system comprising a combination of an organo-aluminum compound and a solid catalyst component containing titanium, chlorine and a hydrocarbyloxy group, of which the X-ray diffraction spectrum has the diffraction lines at least corresponding to the diffraction lines of planes [113] and [300] of titanium trichloride having a layer structure and wherein the content of the hydrocarbyloxy group is 0.01 to 0.3 mole per 1 mole of titanium.

This invention is characterized in that, when an α-olefin branched at the carbon atom of the third positoin is polymerized by using the catalyst system of this invention, a polymerization activity of several times higher than that achievable in the known processes can be obtained.

The solid catalyst component containing titanium, chlorine and a hydrocarbyloxy group, provided by this invention gives an X-ray diffraction spectrum having diffraction lines at least corresponding to the diffraction lines of planes [113] and [300] of titanium trichloride having a layer structure, and contains 0.01 to 0.3 mole of a hydrocarbyloxy group per 1 mole of titanium.

The hydrocarbyloxy group is represented by the general formula $OR^1$, wherein $R^1$ represents a hydrocarbon group having 1 to 20 carbon atoms. Concrete examples of $R^1$ include alkyl groups, such as methyl, ethyl, n-propyl, iso-propyl, n-butyl, iso-butyl, n-amyl, iso-amyl, n-hexyl, n-heptyl, n-octyl, n-decyl, n-dodecyl and the like; aryl groups, such as phenyl, cresyl, xylyl, naphthyl and the like; cycloalkyl groups, such as cyclohexyl, cyclopentyl and the like; allyl groups, such as propenyl and the like; and aralkyl groups, such as benzyl and the like. Among them, straight chain alkyl groups having 2 to 18 carbon atoms and aryl groups having 6 to 18 carbon atoms are particularly preferred. Said hydrocarbyloxy group may also be two or more kinds of different hydrocarbyloxy groups. The content of the hydrocarbyloxy group in the solid catalyst component is 0.01 to 0.3 mole and preferably 0.02 to 0.25 mole, per 1 mole of titanium.

Further, the X-ray diffraction spectrum of said solid catalyst component must have the diffraction lines at least corresponding to the diffraction lines of planes [113] and [300] of titanium trichloride having a layer structure. As used herein, the term "titanium trichloride having a layer structure" means the titanium trichlorides mentioned in G. Natta et al.: J. Polymer Sci., *51,* 399 (1961), wherein the examples include the α-, γ- and δ-form titanium trichlorides. The X-ray diffraction spectrum of the solid catalyst component of tpis invention shows its diffraction lines at least at the lattice spacing (d) of 2.72—2.52 Å and 1.78—1.76 Å. Preferably, the solid catalyst component of this invention gives an X-ray diffraction spectrum having diffraction lines at least corresponding to the diffraction lines of planes [113] and [300] of the δ-form titanium trichloride (d=2.71 Å and 1.77 Å).

As example of the synthetic procedure of such a solid catalyst component, the following method can be illustrated.

This is a method which comprises reducing titanium tetrachloride in the absence of an ether with an organo-aluminum compound represented by the general formula $AlR^2_mX_{3-m}$ wherein $R_2$ represents a hydrocarbon group having 1—20 carbon atoms, X represents a halogen atom and m represents a numerical figure satisfying $1<m\leq3$, heat-treating the reduced product at a temperature not higher than 150°C to obtain a heat-treated solid product, reacting the heat-treated solid product in a hydrocarbon solvent with a mixture comprising a halogen compound represented by the following formula:

$$X_2$$

(X represents a halogen atom) and an ether compound, and treating the reaction product with a titanium compound represented by the following general formula:

$$Ti(OR^1)_nCl_{4-n}$$

wherein $R^1$ represents a hydrocarbon group having 1—20 carbon atoms and n represents a numerical figure satisfying $0<n\leq4$.

Concrete examples of the organo-aluminum compound represented by the general formula $AlR^2_mX_{3-m}$ ($R^2$, X and m are each as defined previously) used in the reduction of this synthetic method include ethylaluminum sesquichloride, dimethylaluminum chloride, diethylaluminum chloride, di-n-propylaluminum chloride, trimethylaluminum, triethylaluminum, triisobutylaluminum, ethyldicyclohexylaluminum, triphenylaluminum, diethylaluminum hydride, diisobutylaluminum hydride, diethylaluminum bromide, diethylaluminum iodide and the like. Particularly, ethylaluminum sesquichloride and diethylaluminum chloride give good results.

The reduction is preferably carried out in an inert hydrocarbon solvent, particularly aliphatic hydrocarbon solvents such as hexane, heptane and the like, at a temperature of −50°C to 50°C, particularly −30°C to 30°C. Concretely saying, it is preferable to add a solution of the organoaluminum compound in an inert hydrocarbon to a solution of titanium tetrachloride in an inert hydrocarbon so slowly as to maintain the system at the predetermined temperature. The concentrations of titanium tetrachloride and the organo-aluminum compound in the inert hydrocarbon solution are both in the range of from 20 to 80% by weight and preferably in the range of from 30 to 60% by weight. The ratio of the organo-aluminum compound represented by the general formula $AlR^2_mX_{3-m}$ to titanium tetrachloride used in the reaction is $m^{-1}$ to $2\times(m-1)^{-1}$ mole organo-aluminum compound and preferably $1\times(m-1)^{-1}$ to $1.5\times(m-1)^{-1}$ more organo-aluminum compound, per 1 mole of titanium tetrachloride. (Here, the molar number of organo-aluminum compound is counted as a monomer). Preferably, the reduction is carried out with an appropriate stirring. After mixing titanium tetrachloride with the organo-aluminum compound, the system is preferably stirred at a temperature falling in the above-mentioned reaction temperature range for 15 minutes to 6 hours to complete the reduction. Thus, a suspension of the reduced solid product is obtained.

The heat-treatment may be performed after separating the reduced solid product from the suspension formed by the reduction and then washing it with an inert hydrocarbon solvent. More preferably, however, the heat-treatment is carried out by directly using the suspension of reduced solid product as it is. The heat-treatment can be performed by heating the suspension of reduced solid product at a temperature not higher than 150°C, preferably at a temperature of 50° to 120°C. The optimum temperature of the heat treatment varies depending on the kind of organo-aluminum compound used in the reduction. For example, the optimum temperature of heat treatment is 50° to 100°C when the organo-aluminum compound is ethylaluminum sesquichloride, and it is 75° to 110°C when the organo-aluminum compound is diethylaluminum chloride. The time of the heat treatment is usually of 15 minutes to 6 hours, and preferably of 30 minutes to 4 hours. After the heat treatment, the solid product is separated from the liquid phase and washed with an inert hydrocarbon solvent to obtain a heat-treated solid product.

The halogen compound is represented by the general formula $X_2$, wherein X represents Cl, Br or I. Preferably, X is I. The halogen compound is used in an amount of $10^{-5}$ mole to $5\times10^{-2}$ mole and preferably $10^{-4}$ mole to $10^{-2}$ mole, per 1 g of the heat-treated solid product.

Preferably, the halogen compound is used in the form of a solution in a hydrocarbon solvent and/or an ether compound.

As said ether compound, dialkkyl ethers, such as diethyl ether, di-n-propyl ether, di-isopropyl ether, di-n-butyl ether, di-n-amyl ether, di-isoamyl ether, di-neopentyl ether, di-n-hexyl ether, di-n-octyl ether, methyl n-butyl ether, methyl isoamyl ether, ethyl isobutyl ether and the like are preferable, among which di-n-butyl ether and di-isoamyl ether are particularly preferred.

The ether compound is used in an amount of $10^{-4}$ mole to 0.03 mole, preferably $10^{-3}$ mole to 0.02 mole, and particularly preferably 0.002 mole to 0.01 mole. per 1 g of the heat-treated solid product.

The reaction between the heat-treated solid product and a mixture composed of the halogen compound and the ether compound is carried out in a hydrocarbon solvent. Concrete examples on said hydrocarbon solvent include aliphatic hydrocarbons, such as hexane, heptane, octane, decane and the like and aromatic hydrocarbons such as benzene, toluene, xylene and the like. The concentration of the heat-treated solid product in the hydrocarbon solvent is 50 to 500 g/liter and preferably 100 to 400 g/liter. The reaction temperature is 50° to 120°C and preferably 70° to 100°C. Preferably, the reaction is carried out while stirring a suspension of the heat-treated solid product. The time of the reacton is preferably in the range of from 5 minutes to 6 hours, and particularly in the range of from 15 minutes to 2 hours.

After the reaction, the solid product is separated from the liquid phase, washed with an inert hydrocarbon solvent and then treated with a titanium compound represented by the general formula $Ti(OR^1)_n\ Cl_{4-n}$. Alternatively, without separating the solid product from the liquid phase the titanium compound represented by the general formula $Ti(OR^1)_nCl_{4-n}$ is directly added to the reacted suspension and then a heat treatment is carried out. In the titanium compound represented by the above-mentioned general formula $Ti(OR^1)_nCl_{4-n}$ wherein $R^1$ represents a hydrocarbon group having 1 to 20 carbon atoms and n represents a numerical figure satisfying $0<n\leqq4$, $R^1$ is preferably a straight chain alkyl group having 2 to 18 carbon atoms or an aryl group having 6 to 18 carbon atoms. The numerical figure n must satisfy $0<n\leqq4$ and preferably $0.2\leqq n\leqq2$.

The treatment with the titanium compound represented by the general formula $Ti(OR^1)_nCl_{4-n}$ is carried out in a hydrocarbon solvent. The concentration of $Ti(OR^1)_nCl_{4-n}$ is not lower than 5% by volume, and preferably 15 to 60% by volume. The temperature of the treatment is 0° to 100°C, and preferably 40° to 80°C. The time of the treatment is 5 minutes to 4 hours, and preferably 15 minutes to 2 hours. The solid catalyst component obtained by the above-mentioned reaction is separated from the liquid phase, washed several times with an inert hydrocarbon solvent, such as hexane, heptane or the like, and then used for polymerization.

Next, as the organo-aluminum compounds usable for the polymerization of olefins in this invention, trialkylaluminums, dialkylaluminum hydrides, dialkylaluminum chlorides, dialkylaluminum alkoxides, dialkylaluminum siloxides and their mixtures can be referred to. Examples of the preferably usable organo-aluminum compound include dimethylaluminum chloride, diethylaluminum chloride, di-isobutylaluminum chloride, diethylaluminum bromide, diethylaluminum iodide, trimethylaluminum, triethylaluminum, tri-isobutylaluminum, diethylaluminum hydride, diethylaluminum ethoxide and mixtures thereof. Among them, trimethylaluminum, triethylaluminum, triisobutylaluminum, diethylaluminum ethoxide and mixtures thereof are particularly preferred. The organo-aluminum compound is used in an amount of 0.5 mole to 100 moles and preferably 1 mole to 50 moles, per 1 mole of titanium atom present in the solid catalyst component.

The branched α-olefins used in this invention are α-olefins branched at the carbon atom of the third position. Concrete examples of such branched α-olefin include 3-methylbutene-1, 3-methylpentene-1, 3-ethylpentene-1, 3-methylhexene-1, 3,5-dimethylhexene-1, vinylcyclopentane, vinylcyclohexane, 4-vinylcyclohexene-1 and the like. Among these branched α-olefins, 3-methylbutene-1 and vinylcyclohexane are particularly preferred. The scope of this invention involves not only the homopolymerization of the above-mentioned branched α-olefins, but also the copolymerization of the above-mentioned branched α-olefins and other olefins copolymerizable therewith. The "other olefins" usable for the copolymerization are straight or branched chain α-olefins having 2 to 12 carbon atoms and straight chain internal olefins having 4 to 12 carbon atoms. Concrete examples hereof include ethylene, propylene, butene-1, pentene-1, hexene-1, octene-1, 4-methylpentene-1, 4-methylhexene-1, 5-methylhexene-1, butene-2, pentene-2 and hexene-2.

The polymerization is carried out in the presence of an inert hydrocarbon such as hexane, heptane or the like as a dilient. Alternatively, the polymerization is carried out in the state of a slurry by using the liquid monomer itself as a medium for the polymerization. The temperature of the polymerization is in the range of from 25° to 150°C. The polymerization is usually carried out under a pressure ranging from 1 atmosphere to about 50 atmospheres. The mode of the polymerization may be any of a continuous system and batch system. Further, various electron-donative compounds may also be added at the time of polymerization for the purpose of improving the activity of the catalyst and the stereospecificity. It is also allowable to add a chain transfer agent, such as hydrogen or the like for the purpose of regulating the molecular weight of the polymer.

Next, the process of this invention will be illustrated with reference to the following examples, but the invention is not limited thereto.

Example 1

(A) Synthesis of the solid product

After replacing, with argon, the inner atmosphere of a flask having a capacity of 300 ml and being equipped with a stirrer and a dropping funnel, 15 ml of n-heptane and 15 ml of titanium tetrachloride were charged into the fwask, and the inner temperature of the flask was maintained at 80°C. Then, while maintaining the inner temperature of the flask at 80°C, a solution composed of 40 ml of n-heptane and 52 ml of n-decyl alcohol was slowly added dropwise thereinto from the dropping funnel over a period of one hour. After dropping it, the content of the flask was stirred at 80°C for 1.5 hours. After lowering the inner temperature of the flask to 50°C, a solution composed of 40 ml of n-heptane and 17 ml of diethylaluminum chloride was slowly added

dropwise thereinto from the dropping funnel over a period of 2 hours, while maintaining the inner temperature of the flask at 50°C. After dropping it, the temperature was elevated to 60°C, and the content of the flask was stirred for one hour. The flask was allowed to stand at room temperature and the reaction mixture was separated into solid and liquid phases, after which the solid product was washed six times with 100 ml of n-heptane and dried under reduced pressure to obtain a brown-colored solid product.

(B) Synthesis of the solid catalyst component.

After replacing the inner atmosphere of a flask having a capacity of 100 ml with argon, 6,75 g of the solid product obtained in (A) above and 24 ml of n-heptane were charged into the flask. While maintaining the inner temperature of the flask at 75°C, 10 ml of monochlorobenzene, 4,1 ml of di-n-butylether and 5,4 ml of titanium tetrachloride were added and reacted at this temperature for 1 hour. The flask was allowed to stand at room temperature and the reaction mixture was separated into solid and liquid phases, after which the solid product was washed four times with 50 ml of n-heptane and then dried under reduced pressure to obtain a solid catalyst component.

One gram of this solid catalyst component contained 5.1 millimoles of titanium, 0.17 millimole of n-decylalkoxy group and 0.02 millimole of aluminum, and the n-decylalkoxy group/titanium ratio was 0.033 (by mole). The X-ray diffraction spectrum of this solid catalyst component had diffraction lines corresponding to the diffraction lines of planes [113] and [300] of the δ-form titanium trichloride.

(C) Polymerization of vinylcyclohexane

After replacing, with argon, the inner atmosphere of a flask having a capacity of 100 ml and being equipped with a magnetic stirrer, 9.6 ml of n-heptane, 2.6 millimoles of triethylaluminum, 131.1 mg of the solid catalyst component obtained in (B) above and 5 ml of vinylcyclohexane were added. The inner temperature of the flask was elevated to 50°C, and polymerization was carried out at this temperature for 25 minutes. For the sake of after-treatment, the product was washed several times with 40 ml of a 1:9 (by volume) mixture of hydrochloric acid (hydrogen chloride content 36%) and methanol and then it was thoroughly washed with water. Then, it was washed twice with 40 ml of methanol, filtered and dried under reduced pressure to obtain a granular polymer.

The yield of the granular polymer was 1.94 g. This means that the yield (g) of polyvinylcyclohexane per 1 g of solid catalyst component (hereinafter simply referred to as "Polym/Cat") was 14.8.

Example 2

(A) Synthesis of the heat-treated solid product

After replacing, with argon, the inner atmosphere of a four-necked flask having a capacity of 500 ml and equipped with a stirrer and a dropping funnel, 114 ml of n-heptane and 30 ml of titanium tetrachloride were charged into the flask and the temperature of the resulting solution was maintained at −10°C. Then, while maintaining the inner temperature of the flask at −5°C to −10°C, a solution composed of 150 ml of n-heptane and 68.3 ml of ethylaluminum sesquichloride was added dropwise thereinto from the dropping funnel over a period of 2 hours. After dropping it, the content of the flask was stirred at room temperature for 30 minutes. Then, the temperature was elevated to 65°C, and a heat-treatment was carried at this tembrature for 2 hours. Then, the flask was allowed to stand at room temperature and the reaction mixture was separated into solid and liquid phases, after which the solid product was washed four times with 200 ml of n-heptane and dried under reduced pressure to obtain a heat-treated solid product.

(B) Synthesis of the solid catalyst component

After replacing, with argon, the inner atmosphere of a flask having a capacity of 200 ml and being equipped with a stirrer, 91.5 ml of n-heptane, 24.0 ml of di-isoamyl ether and 3.0 g of iodine were charged into the flask, and the iodine was dissolved at 50°C for 30 minutes. Then, 18.3 g of the heat-treated solid product obtained in (A) above was charged into the flask and reacted at 95°C for one hour. After the reaction, the reaction mixture was cooled to 65°C, 30 ml of a titanium compound represented by $Ti(OBu)_{0.5}Cl_{3.5}$ was added, and the reaction mixture was treated at 65°C for 30 minutes. Then, the flask was allowed to stand at room temperature and the reaction mixture was separated into solid and liquid phases, after which the solid product was washed five times with 50 ml of n-heptane and dried under reduced pressure to obtain a violet-colored solid catalyst component. One gram of this solid catalyst component contained 5.8 millimoles of titanium, 0.21 millimole of n-butoxy group and 0.41 millimole of aluminum, and its n-butoxy group/titanium ratio was 0.036 (by mole). The X-ray diffraction spectrum of this solid catalyst component had diffraction lines corresponding to the diffraction lines of planes [003], [113] and [300] of the δ-form titanium trichloride.

(C) Polymerization of vinylcyclohexane

After replacing, with argon, the inner atmosphere of a flask having a capacity of 100 ml and being equipped with a magnetic stirrer, 9.6 ml of n-heptane, 2.6 millimoles of triethylaluminum, 95.8 of the solid catalyst component obtained in (B) above and 5 ml of vinylcyclohexane were added. The inner temperature of the flask was elevated to 50°C, and polymerization was carried out at this temperature for one hour. For the sake of after-treatment, the product was washed several times with 40 ml of a 1:9 (by volume) mixture of hydrochloric acid (hydrogen chloride content 36%) and methanol and then it was

thoroughly washed with water. Then, it was washed twice with 40 ml of methanol, filtered and dried under reduced pressure to obtain a granular polymer. As the result, the yield of the granular polymer was 2.53 g, and Polym/Cat was 26.4.

Comparative example 1

Vinylcyclohexane was polymerized by repeating the procedure of Example 1-(C), except that the solid catalyst component obtained in Example 1-(B) was replaced with 101.5 mg of a commercially available titanium trichloride [this titanium trichloride had been prepared by reducing $TiCl_4$ with organo-aluminum to obtain a complex compound of $TiCl_3$ and $AlCl_3$ (molar ratio Ca. 3:1), treating the complex with di-isoamyl ether to extract off the major part of $AlCl_3$ and then activating the residue by a treatment with $TiCl_4$; 1 g of this solid catalyst component contained 6.05 millimoles of titanium and 0.16 millimole of aluminum]. The yield of the granular polymer was 0.51 g, and Polym/Cat was 5.0.

Comparative example 2

A solid catalyst component was prepared by repeating the procedure of Example 1-(B), except that the reaction was carried out at 100°C for one hour by using 4.42 g of the solid product obtained in Example 1-(A) and 20 ml of titanium tetrachloride and using neither n-heptane nor di-n-butyl ether. One gram of this solid catalyst component contained 5.85 millimoles of titanium, 0.22 millimole of n-butoxy group and 0.18 millimole of aluminum, and its n-butoxy group/titanium ratio was 0.038 (by mole). The X-ray diffraction spectrum of this solid catalyst component had the same diffraction lines as those of β-form titanium trichloride having a fibriform structure.

Then, vinylcyclohexane was polymerized by repeating the procedure of Example 1-(C), except that 107.4 mg of this solid catalyst component was used. The yield of the granular polymer was 0.44 g, and Polym/Cat was 4.1.

Comparative example 3

A solid catalyst component was prepared by repeating the procedure of Example 1-(B), except that the reaction was carried out at 90°C for one hour by using 6.62 g of the solid product obtained in Example 1-(A), 33.1 ml of n-heptane and 9.7 ml of titanium tetrachloride and using no di-n-butyl ether. One gram of this solid catalyst component contained 5.36 millimoles of titanium, 2.11 millimoles of n-butoxy group and 0.17 millimole of aluminum, and its n-butoxy group/titanium ratio was 0.394 (by mole). In the X-ray diffraction spectrum of this solid catalyst component, the characteristic peaks of titanium trichloride crystal were not found at all. Then, vinylcyclohexane was polymerized by repeating the procedure of Example 1-(C), except that 98.0 mg of this solid catalyst component was used. As the result, no granular polymer was formed at all.

Comparative example 4

Vinylcyclohexane was polymerized by repeating the procedure of Example 1-(C), except that the solid product obtained in Example 1-(A) was used in an amount of 81.2 mg. As the result, no granular polymer was formed at all.

**Claims**

1. A process for homopolymerizing an α-olefin branched at the carbon atom of the third position or copolymerizing said α-olefin with another olefin in the presence of a catalyst system which comprises:

(A) a solid catalyst component containing titanium, chlorine and a hydrocarbyloxy group of which the X-ray diffraction spectrum has diffraction lines at least corresponding to the diffraction lines of planes [113] and [300] of titanium trichloride having a layer structure and wherein the content of the hydrocarbyloxy group is 0.01 mole to 0.3 mole per 1 mole of titanium, wherein said solid catalyst component is a solid catalyst component being synthesized by reducing titanium tetrachloride in the absence of an ether with an organo-aluminum compound represented by the following general formula:

$$AlR^2_mX_{3-m}$$

wherein $R^2$ represents a hydrocarbon group having 1 to 20 carbon atoms, X represents a halogen atom and m represents a numerical figure satisfying $1<m\leqq3$, followed by heat-treating the reduced product at a temperature not higher than 150°C, reacting the heat-treated product with a mixture comprising a halogen compound represented by the following general formula:

$$X_2$$

wherein X represents a halogen atom, and an ether compound in a hydrocarbon solvent wherein the halogen compound and the ether compound are used in an amount of $10^{-5}$ mole to $5\times10^{-2}$ mole and $10^{-4}$ mole to 0.03 mole, respectively, per 1 g of the heat-treated solid product and then treating the reaction product with a titanium compound represented by the following general formula:

$$Ti(OR^1)_nCl_{4-n}$$

wherein $R^1$ represents a hydrocarbon group having 1 to 20 carbon atoms and n represents a numerical figure satisfying $0<n\leq4$, and

(B) an organoaluminum compound.

2. A process according to Claim 1, wherein said hydrocarbyloxy group is represented by the following general formula:

$$OR^1$$

wherein $R^1$ represents a hydrocarbon group

having 1 to 20 carbon atoms.

3. A process according to Claim 2, wherein $R^1$ in the general formula $OR^1$ is a straight chain alkyl group having 2 to 18 carbon atoms or an aryl group having 6 to 18 carbon atoms.

4. A process according to Claim 1, wherein the content of the hydrocarbyloxy group is 0.02 mole to 0.25 mole per 1 mole of titanium.

5. A process according to Claim 1, wherein the X-ray diffraction spectrum of said solid catalyst component has diffraction lines at least corresponding to the diffraction lines of planes [113] and [300] of the δ-form titanium trichloride.

6. A process according to Claim 1, wherein the organo-aluminum compound used for the polymerization is trialkylaluminum, dialkylaluminum hydride, dialkylaluminum chloride, dialkylaluminum alkoxide, dialkylaluminum siloxide or a mixture thereof.

7. A process according to Claim 6, wherein the organo-aluminum compound is trimethylaluminum, triethylaluminum, triisobutylaluminum, diethylaluminum ethoxide or a mixture thereof.

8. A process according to Claim 1, wherein the organoaluminum compound used for the polymerization is used in an amount ranging from 0.5 mole to 100 moles per 1 mole of titanium atom present in the solid catalyst component.

9. A process according to Claim 1, wherein said α-olefin branched at the carbon atom of the third position is 3-methylbutene-1 or vinylcyclohexane.

10. A process according to Claim 1, wherein the temperature of the polymerization is in the range of from 25° to 150°C.

11. A solid catalyst component synthesized by reducing titanium tetrachloride with in the absence of an ether an organo-aluminum compound represented by the following general formula:

$$AlR^2_mX_{3-m}$$

wherein $R^2$, X and m are each as defined above, followed by heat-treating the reduced product at a temperature not higher than 150°C, reacting the heat-treated product with a mixture comprising a halogen compound represented by the general formula:

$$X_2$$

wherein X represents a halogen atom, and an ether compound in a hydrocarbon solvent wherein the halogen compound and the ether compound are used in an amount of $10^{-5}$ mole to $5\times10^{-2}$ mole and $10^{-4}$ mole to 0.03 mole, respectively, per 1 g of the heat-treated solid product, and then treating the reaction product with a titanium compound represented by the following formula:

$$Ti(OR^1)_nCl_{4-n}$$

wherein $R^1$ and n are each as defined above.

**Patentansprüche**

1. Verfahren zur Homopolymerisation eines α-Olefins, das am in der dritten Position befindlichen Kohlenstoffatom verzweigt ist, oder zur Copolymerization diese α-Olefins mit einem anderen Olefin in Gegenwart eines Katalysatorsystems welches folgende Bestandteile enthält:

(A) eine feste Katalysatorkomponente, enthaltend Titan, Chlor und einen Kohlenwasserstoffoxyrest, deren Röntgenstrukturanalyse-Spektrum Beugungslinien aufweist, die mindestens den Beugungslinien der Ebenen [113] und [300] von Titantrichloride mit einer Schichtstruktur entsprechen, und wobei der Gehalt an dem Kohlenwasserstoffoxyrest 0,01 Mol bis 0,3 Mol pro 1 Mol Titan beträgt, wobei die feste Katalysatorkomponente hergestellt wird durch Reduktion von Titantetrachlorid in Abwesenheit eines Ethers mit einer aluminiumorganischen Verbindung der folgenden allgemeinen Formel:

$$AlR^2_mX_{3-m}$$

in der $R^2$ einen Kohlenwasserstoffrest mit 1 bis 20 Kohlenstoffatomen darstellt, X ein Halogenatom bedeutet und m einen Zahlenwert hat, der der Bedingung $1<m\leq3$ genügt, gefolgt von einer Hitzebehandlung des reduzierten Produkts bei einer Temperatur, die nicht höher als 150°C ist, Umsetzung des hitzebehandelten Produkts mit einem Gemisch aus einer Halogenverbindung der folgenden allgemeinen Formel:

$$X_2$$

in der X ein Halogenatom ist, und einer Etherverbindung in einem Kohlenwasserstoff-Lösungsmittel, wobei die Halogenverbindung und die Etherverbindung in einer Menge von $10^{-5}$ Mol bis $5\times10^{-2}$ Mol bzw. $10^{-4}$ Mol bis 0,03 Mol pro 1 g des hitzebehandelten Festprodukts verwendet werden, und anschließender Behandlung des Reaktionsproduktes mit einer Titanverbindung der folgenden allgemeinen Formel:

$$Ti(OR^1)_nCl_{4-n}$$

in der $R^1$ einen Kohlenwasserstoffrest mit 1 bis 20 Kohlenstoffatomen darstellt und n einen Zahlenwert hat, der der Bedingung $0<n\leq4$ genügt; und

(B) eine aluminium organische Verbindung.

2. Verfahren nach Anspruch 1, in dem der Kohlenwasserstoffoxyrest die folgende allgemeine Formel hat:

$$OR^1$$

in der $R^1$ einen Kohlenwasserstoffrest mit 1 bis 20 Kohlenstoffatomen darstellt.

3. Verfahren nach Anspruch 2, in dem $R^1$ in der allgemeinen Formel $OR^1$ einen geradkettigen Alkylrest mit 2 bis 18 Kohlenstoffatomen oder

einen Arylrest mit 6 bis 18 Kohlenstoffatomen darstellt.

4. Verfahren nach Anspruch 1, in dem der Gehalt an dem Kohlenwasserstoffoxyrest 0,02 Mol bis 0,25 Mol pro 1 Mol Titan beträgt.

5. Verfahren nach Anspruch 1, in dem das Röntgenstrukturanalyse-Spektrum der festen Katalysatorkomponente Beugungslinien aufweist, die mindestens Beugungslinien der Ebenen [113] und [300] der δ-Form von Titantrichlorid entsprechen.

6. Verfahren nach Anspruch 1, in dem die aluminiumorganische Verbindung, die für die Polymerisation verwendet wird, Trialkylaluminium-, Dialkylaluminiumhydrid, Dialkylaluminiumchlorid, Dialkylaluminiumalkoxid, Dialkylaluminiumsiloxid oder ein Gemisch davon ist.

7. Verfahren nach Anspruch 6, in dem die aluminiumorganische Verbindung Trimethylaluminium-, Triethylaluminium-, Triisobutylaluminium-, Diethylaluminiumethoxid oder ein Gemisch davon ist.

8. Verfahren nach Anspruch 1, in dem die aluminiumorganische Verbindung, die für die Polymerisation verwendet wird, in einer Menge von 0,5 Mol bis 100 Mol pro 1 Mol der in der festen Katalysatorkomponente vorhandenen Titanatome eingesetzt wird.

9. Verfahren nach Anspruch 1, in dem das am in der dritten Position befindlichen Kohlenstoffatom verzweigte α-Olefin 3-Methylbuten-1 oder Vinylcyclohexan ist.

10. Verfahren nach Anspruch 1, in dem die Polymerisationstemperatur im Bereich von 25 bis 150°C liegt.

11. Feste Katalysatorkomponente, hergestellt durch Reduktion von Titantetrachloride in Abwesenheit eines Ethers mit einer aluminiumorganischen Verbindung der folgenden allgemeinen Formel:

$$AlR^2_mX_{3-m}$$

in der $R^2$, X und m die vorstehend angegebene Bedeutung haben, gefolgt von einer Hitzebehandlung des reduzierten Produkts bei einer Temperatur, die nicht höher als 150°C ist, Umsetzung des hitzebehandelten Produkts mit einem Gemisch aus einer Halogenverbindung der folgenden allgemeinen Formel:

$$X_2$$

in der X ein Halogenatom darstellt, und einer Etherverbindung in einem Kohlenwasserstoff-Lösungsmittel, wobei die Halogenverbindung und die Etherverbindung in einer Menge von $10^{-5}$ bis $5\times10^{-2}$ Mol bzw. $10^{-4}$ Mol bis 0,03 Mol pro 1 g des hitzebehandelten Festproduktes eingesetzt werden, und anschließende Behandlung des Reaktionsprodukts mit einer Titanverbindung der folgenden allgemeinen Formel:

$$Ti(OR^1)_nCl_{4-n}$$

in der $R^1$ und n die vorstehend angegebene Bedeutung haben.

**Revendications**

1. Un procédé d'homopolymérisation d'une α-oléfine ramifiée sur l'atome de carbone en position 3 ou de copolymérisation de ladite α-oléfine avec une autre oléfine en présence d'un système de catalyseur qui comprend:

(A) un composant solide de catalyseur contenant du titane, du chlore et un groupe hydrocarbyloxy, dont le spectre de diffraction des rayons X présente des lignes de diffraction correspondant au moins aux lignes de diffraction des plans [113] et [300] du trichlorure de titane ayant une structure en couches, et dans lequel la proportion du groupe hydrocarbyloxy est de 0,01 mole à 0,3 mole par mole de titane, dans lequel ledit composant solide de catalyseur est un composant solide de catalyseur dont on a fait la synthèse en réduisant du tétrachlorure de titane, en absence d'éther, avec un composé organique de l'aluminium représenté par la formule générale suivante:

$$AlR^2_mX_{3-m}$$

dans laquelle $R^2$ représente un gropue hydrocarboné contenant 1 à 20 atomes de carbone, X représente un atome d'halogène et m représente un nombre satisfaisant à $1<m\leqslant3$,

puis en traitant par la chaleur le produit réduit à une température ne dépassant pas 150°C, en faisant réagir le produit traité par la chaleur avec un mélange comprenant un composé halogène représenté par la formule générale suivante:

dans laquelle X représente un atome d'halogène, et un éther, dans un solvant hydrocarboné, le composé halogéné et l'éther étant utilisés en une quantité respectivement de $10^{-5}$ mole à $5\times10^{-2}$ mole et de $10^{-4}$ mole à 0,03 mole par gramme du produit solide traité par la chaleur, et en traitant ensuite le produit de la réaction par un composé du titane représenté par formule générale suivante:

$$Ti(OR^1)_nCl_{4-n}$$

dans laquelle R' représente un groupe hydrocarboné contenant 1 à 20 atomes de carbone et n représente un nombre satisfaisant à $0<n\leqslant4$, et

(B) un composé organique de l'aluminium.

2. Un procédé suivant la revendication 1, dans lequel ledit groupe hydrocarbyloxy est représenté par la formule générale suivante:

$$OR^1$$

dans laquelle $R^1$ représente un groupe hydrocarboné contenant 1 à 20 atomes de carbone.

3. Un procédé suivant la revendication 2, dans lequel $R^1$ dans la formule générale $OR^1$ est un

groupe alkyle à chaîne droite contenant 2 à 18 atomes de carbone ou un groupe aryle contenant 6 à 18 atomes de carbone.

4. Un procédé suivant la revendication 1, dans lequel la proportion du groupe hydrocarbyloxy est de 0,02 mole à 0,25 mole par mole de titane.

5. Un procédé suivant la revendication 1, dans lequel le spectre de diffraction des rayons X dudit composant solide de catalyseur présente des lignes de diffraction correspondant au moins aux lignes de diffraction des plans [113] et [300] du trichlorure de titane de la forme δ.

6. Un procédé suivant la revendication 1, dans lequel le composé organique de l'aluminium utilisé pour la polymérisation est le trialkylaluminium, l'hydrure de dialkylaluminium, le chlorure de dialkylaluminium, l'alkoxyde de dialkylaluminium, le siloxyde de dialkylaluminium ou un mélange de ces substances.

7. Un procédé suivant la revendication 6, dans lequel le composé organique de l'aluminium est le triméthylaluminium, le triéthylaluminium, le triisobutylaluminium, l'éthoxyde de diéthylaluminium ou un mélange de ces substances.

8. Un procédé suivant la revendication 1, dans lequel le composé organique de l'aluminium utilisé pour la polymérisation est employé en un quantité de 0,5 mole à 100 moles par mole d'atome de titane présent dans le composant solide de catalyseur.

9. Un procédé suivant la revendication 1, dans lequel ladite α-oléfine ramifiée sur l'atome de carbone en position 3 est le 3-méthylbutane-1 ou le vinylcyclohexane.

10. Un procédé suivant la revendication 1, dans lequel la température de la polymérisation est dans la gamme de 25° à 150°C.

11. Un composant solide de catalyseur dont on a fait la synthèse en réduisant du tétrachlorure de titane, en absence d'éther, avec un composé organique de l'aluminium représenté par la formule générale:

$$AlR^2_mX_{3-m}$$

dans laquelle $R^2$, X et m ont les définitions susindiquées, puis en traitant par la chaleur le produit réduit à une température ne dépassant pas 150°C, en faisant réagir le produit traité par la chaleur avec un mélange comprenant un composé halogéné représenté par la formule générale:

$$X_2$$

dans laquelle X représente un atome d'halogène, et un éther, dans un solvant hydrocarboné, le composé halogéné et l'éther étant employés en une quantité respectivement de $10^{-5}$ mole à $5\times10^{-2}$ mole et de $10^{-4}$ mole à 0,03 mole par gramme du produit solide traité par la chaleur, et en traitant ensuite le produite de la réaction par un composé du titane représenté par la formule générale suivante:

$$Ti(OR^1)_nCl_{4-n}$$

dans laquelle $R^1$ et n ont les définitions susindiquées.